(19) Europäisches Patentamt
European Patent Office
Office européen des brevets

(11) Veröffentlichungsnummer: **0 201 690 B1**

(12) # EUROPÄISCHE PATENTSCHRIFT

(45) Veröffentlichungstag der Patentschrift: **02.12.92**

(51) Int. Cl.$^5$: **C07C 245/20**, C09B 29/00, C09B 67/26

(21) Anmeldenummer: **86103541.8**

(22) Anmeldetag: **15.03.86**

(54) **Verfahren zur Herstellung aromatischer Diazoniumsalze und von Azofarbstoffen.**

(30) Priorität: **30.03.85 DE 3511752**

(43) Veröffentlichungstag der Anmeldung:
**20.11.86 Patentblatt 86/47**

(45) Bekanntmachung des Hinweises auf die Patenterteilung:
**02.12.92 Patentblatt 92/49**

(84) Benannte Vertragsstaaten:
**CH DE FR GB LI**

(56) Entgegenhaltungen:
**EP-A- 0 100 043**
**GB-A- 817 001**

(73) Patentinhaber: **BAYER AG**

**W-5090 Leverkusen 1 Bayerwerk(DE)**

(72) Erfinder: **Wolff, Joachim, Dr.**
**Neuhauserweg 6**
**W-5060 Bergisch-Gladbach 1(DE)**
Erfinder: **Wolf, Karlheinz, Dr.**
**Paul-Klee-Strasse 77**
**W-5090 Leverkusen 1(DE)**
Erfinder: **Klipper, Reinhold Maria, Dr.**
**Bismarkstrasse 13**
**W-5000 Köln 50(DE)**
Erfinder: **Lange, Peter Michael, Dr.**
**Walter-Flex-Strasse 9**
**W-5090 Leverkusen 1(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung von Diazoniumsalzen durch Diazotierung diazotierbarer Amine mittels Salzen der salpetrigen - Säure, insbesondere Alkalisalzen wie den Na-Salzen oder Erdalkalisalzen, und Säuren.

Die Umsetzung von aromatischen Aminen mit salpetriger Säure in mineralsaurer Lösung unter Erhalt von Diazoniumsalzen ist längs bekannt, siehe beispielsweise Beyer, Lehrbuch der organischen Chemie, 18. Auflage, 1976, Seite 501 ff. Hierbei löst man gewöhnlich 1 Mol aromatisches Amin in 2 1/2 bis 3 Mol Mineralsäure und fügt Natriumnitrit hinzu. Hierbei wird 1 Mol Säure zur Salzbildung des Amins verbraucht und ein weiteres Mol setzt aus dem Natriumnitrit die salpetrige Säure in Freiheit, die mit dem Salz des Amins zum Diazoniumsalz reagiert. Verwiesen wird beispielsweise auch auf EP-A-100 043.

Nachteilig an dem bekannten Verfahren ist, daß relativ große Mengen an Salzen anfallen und das die Diazoniumsalze im allgemeinen als Dispersionen erhalten werden.

Der Erfindung lag die Aufgabe zugrunde, ein verbessertes Verfahren zur Herstellung von aromatischen Diazoniumsalzen zur Verfügung zu stellen.

Gegenstand der Erfindung ist ein Verfahren zur Herstellung aromatischer Diazoniumsalze durch Diazotierung von Aminen mittels Salzen der salpetrigen Säure und Säuren, dadurch gekennzeichnet, daß man als Säuren im Reaktionsmedium unlösliche saure Gruppen aufweisende organische oder anorganische Kationenaustauscher verwendet.

Die Kationenaustauscher wirken als im Reaktionsmedium unlösliche, hochmolekulare, feste Säuren.

Das Verfahren wird vorzugsweise in wäßrigem oder waßrigorganischem Medium durchgeführt, kann aber auch in rein organischem Medium durchgeführt werden und zwar bei Temperaturen von -20 °C bis +50 °C.

Im allgemeinen werden mindestens stöchiometrische Mengen der als feste Säure vorliegenden Kationenaustauscher verwendet, d.h. mindestens 1 Äquivalent pro Mol Salz der salpetrigen Säure.

Das für die Diazotierungsreaktion erforderliche zweite Äquivalent Säure kann eine übliche starke Mineralsäure wie HCl oder $H_2SO_4$ sein, bevorzugt jedoch eine Sulfo- oder Carboxygruppe des zu diazotierenden Amins oder aber wie im Falle von Aminen, die frei von Sulfo- oder Carboxygruppen sind, die Sulfo- oder Carboxygruppe von gegebenenfalls zugesetzten Dispergiermitteln wie Ligninsulfonaten oder Kondensationsprodukten von Formaldehyd mit aromatischen Sulfonsäuren.

Der Kationenaustauscher kann dabei bevorzugt unmittelbar im Diazotierungsgemisch vorliegen, oder außerhalb, bzw. im getrennt vorliegenden Medium, in dem sich das Salz der salpetrigen Säure befindet

Als Kationenaustauscher finden vorzugsweise Verwendung: synthetische organische Ionenaustauscher auf Kunstharz-Basis, in Perl- oder Granulatform, bspw. stark saure makroporöse oder gelförmige Perlpolymerisate auf der Basis von vernetztem Polystyrol, die Sulfonsäuregruppen tragen, so z.B. der Kationenaustauscher der BAYER AG SC 108. Ferner kommen in Betracht Perlpolymere auf Polystyrolbasis, bei denen die Styrolkerne durch folgende Gruppen substituiert sein können:

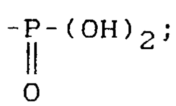 ; 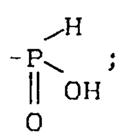 ; $-CH_2-N(CH_2COOH)_2$; 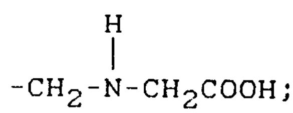

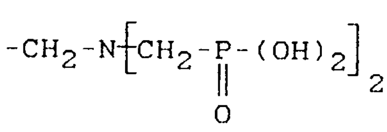 ; 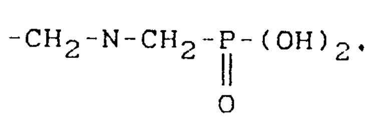.

Es können auch schwach saure Kationenaustauscher mit -COOH Gruppen in Perl- oder Granulatform, bevorzugt aber in Perlform, eingesetzt werden. Dazu gehören Kationenaustauscher auf der Basis von vernetzter Acrylsäure oder vernetzter Methacrylsäure, vernetztem und anschließend verseiftem Maleinsäureanhydrid. Als Vernetzer werden dabei Polyvinylaromaten und hierbei bevorzugt Divinylbenzol sowie Octadien 1.7 bzw. Hexadien 1.5 alleine oder in Kombination mit Divinylbenzol eingesetzt.

In Betracht kommen auch feste Ionenaustauscher mit sauren Gruppen, die durch Kondensationsreaktionen hergestellt wurden. Hierzu gehören Kationenaustauscher auf der Basis von Phenol oder Phenolderivaten, die mit Formaldehyd kondensiert wurden. Stark saure Kationenaustauscher mit Sulfonsäuregruppen

entstehen durch Kondensation von am Kern sulfonierten Aromaten (Phenolsäure oder Naphthalinsulfonsäure) mit Formaldehyd. Ferner können Harze mit $-CH_2-SO_3H$-Gruppen auf Phenolbasis durch gleichzeitige Reaktion von HCHO, Natriumsulfit und Phenol hergestellt werden.

Entsprechende Kondensationsharze mit Carboxylgruppen werden durch Reaktion von HCHO mit z. B. 1,3,5 Resorcylsäure oder durch Umsetzung von HCHO mit Phenoxyessigsäure, Resorcin-O-essigsäure oder analogen Verbindungen hergestellt.

In Betracht kommen auch schwach saure Harze, die durch Kondensation von Phenol oder Resorcin mit Formaldehyd hergestellt wurden. Neben den synthetischen organischen Kationenaustauschern können auch anorganische Kationenaustauscher als feste Säuren eingesetzt werden. Dazu gehört insbesondere die große Klasse der Zeolith-Minerale oder die Klasse der Glaukonite (Grünsande). Zu den Zeolithen gehören u. a. Mordenit $(Ca, K_2, Na_2) [Al\ Si_5O_{12}]_2 \cdot 6,6\ H_2O$ und Natrolith $Na_2[Si_3Al_2O_{10}] \cdot 2\ H_2O$.

Kationenaustauscher der genannten Art sind in großer Zahl im Handel und in der Literatur beschrieben, vgl. z.B. Ullmanns Enzyklopädie d. Technischen Chemie, 4. Auflage, Band 13, Seite 279-346.

Das erfindungsgemäße Verfahren eignet sich ganz besonders zur Diazotierung ionischer Gruppen, insbesondere Sulfogruppen aufweisender Amine in wäßrigem oder organisch-wäßrigem Medium.

Die Diazotierung kann dabei sowohl direkt als auch indirekt erfolgen. Bei der einen Verfahrensvariante wird eine Dispersion oder Lösung des bevorzugt ionische Gruppen enthaltenden aromatischen Amins in Wasser in Gegenwart mindestens äquivalenter Mengen einer wasserunlöslichen Säure bevorzugt mit einem Alkali- oder Erdalkalinitrit diazotiert. Die für die Diazotierung notwendige salpetrige Säure wird spontan durch Kontakt des Nitritsalzes mittels Kationenaustausch gebildet. In einer weiteren Verfahrensvariante (indirekt) wird das aromatische Amin in Wasser bei pH = 6 - 12, bevorzugt 6 - 9, mit der für die Diazotierung notwendigen Menge an Alkali- oder Erdalkalinitrit oder auch anderen Nitritsalzen, versetzt und die so erhaltene Lösung oder Suspension zu einer Suspension der wasserunlöslichen Säure gegeben, wobei spontan Diazotierung einsetzt.

Die Entfernung des bei der Diazotierungsreaktion gebildeten Salzes, insbesondere Alkali- oder Erdalkalisalzes der wasserunlöslichen Säure erfolgt in einfacher Weise durch Siebung oder Filtration und zwar unmittelbar nach der Diazotierung oder aber nach der anschließenden Kupplung zum Azofarbstoff.

Nach erfolgter Diazotierung wird in üblicher Weise mit Kupplungskomponenten umgesetzt, vorzugsweise in Gegenwart anorganischer oder organischer basischer Verbindungen, gegebenenfalls in Gegenwart wassermischbarer organischer Lösungsvermittler oder hydrotroper Verbindungen oder anionischer oder nichtionischer Dispergiermittel, bspw. Kondensationsprodukten aus aromatischen Sulfonsäuren bspw. Naphthalinmono-, -di- oder -trisulfonsäuren, Ditolylethersulfonsäuren, Terphenylsulfonsäuren und Formaldehyd oder Umsetzungsprodukten von Alkanolen mit Alkylenoxiden wie Ethylenoxid.

Die genannten Lösungsvermittler, hydrotropen Verbindungen und Dispergiermittel können auch bereits dem Diazotierungsgemisch zugesetzt werden.

Geeignete basische Verbindungen für die Kupplung sind-insbesondere für anionische Farbstoffe - solche, deren Kation zu einer Verbesserung der Löslichkeit des Farbstoffs führt, bevorzugt basische Li-Verbindungen wie LiOH, $Li_2CO_3$, primäre, sekundäre, tertiäre oder quartäre Amine, insbesondere Mono-, Di- und Trialkanolamine oder die entsprechenden ethoxylierten oder propoxylierten Derivate, Morpholin oder Ammoniumhydroxid.

Geeignete wassermischbare organische Verbindungen und/oder hydrotrope Verbindungen sind beispielsweise ein- oder mehrwertige Alkohole, niedrigmolekulare Ether, Glykolether, wasserlösliche aliphatische oder cyclische Amide, Lactame, bevorzugt $\epsilon$-Caprolactam oder N-Alkylpyrrolidone, und/oder nieder aliphatische Sulfoxide und/oder schwefelhaltige Verbindungen wie Dimethylsulfon, Sulfolan und der in $\alpha$- und $\beta$-Stellung substituierten Derivate und/oder hydrotrope Verbindungen wie Harnstoff sowie dessen Derivate, besonders bevorzugt N,N'-Dimethylharnstoff und/oder Mischungen mit Aminen wie Triethylamin, Triethanolamin.

Im Falle von Reaktivfarbstoffen kommen selbstverständlich nur solche Verbindungen in Frage, die zu keiner die Farbstärke senkenden Reaktion mit der Reaktivgruppe fähig sind, als da bevorzugt gelten $\epsilon$-Caprolactam, N-Alkyl-Pyrrolidon, Dicyandiamid, Dimethylsulfon und/oder N,N'-Dimethylharnstoff.

Gegenstand der vorliegenden Erfindung ist demnach auch ein Verfahren zur Herstellung von Azofarbstoffen, vorzugsweise sulfogruppenhaltiger Reaktivfarbstoffen, durch Umsetzung von Diazoniumsalzen mit Kupplungskomponenten, dadurch gekennzeichnet, daß die Herstellung der Diazoniumsalze nach dem oben beschriebenen Verfahren erfolgt. Das Verfahren wird vorzugsweise im wäßrigen oder wäßrig-organischen Medium unter den oben angegebenen Reaktionsbedingungen durchgeführt und findet vorzugsweise Anwendung für die Herstellung ionische wasserlöslichmachende Gruppen aufweisender Azofarbstoffe, insbesondere solchen mit Sulfo-, Carboxy-, Phosphorsäure-, Sulfonamid- und Disulfimidgruppen.

Vorzugsweise wird die Kupplung unter Verwendung von basichen Li-Verbindungen wie LiOH oder

$Li_2CO_3$ sowie primären, sekundären, tertiären oder quartären Alkylaminen bzw. Alkylammoniumverbindungen, insbesondere solchen mit $C_1$-$C_4$-Alkylgruppe oder $C_2$-$C_4$-Hydroxyalkylgruppe oder gegebenenfalls mit Ethylenoxid oder Propylenoxid verätherter $C_2$-$C_4$-Hydroxyalkylgruppe, Morpholin oder Ammoniumhydroxid durchgeführt.

Bei Verwendung von Aminen oder Ammoniumhydroxid erhält man dabei Azofarbstoffe, die praktisch frei von anorganischen Salzen sind.

Der Kationenaustauscher kann vor oder nach der Kupplung abgetrennt werden.

Im Falle der Verwendung basischer Lithiumverbindungen als Säurefänger bei der Kupplung erhält man direkt und ohne Zwischenisolierung der Farbstoffe stabile konzentrierte Lösungen mit einem sehr geringen Gehalt an Na-Kationen, im Falle der Verwendung von Ammoniumhydroxid oder Aminen oder Ammoniumverbindungen Lösungen, die praktisch frei von anorganischen Salzen sind.

Bevorzugte Lösungen enthalten neben Wasser beispielsweise

| | |
|---|---|
| 7-35 Gew.-%, | vorzugsweise 10-35 Gew.-% Farbstoff |
| 0-30 Gew.-% | organische Lösungsvermittler und/oder hydrotrope Verbindungen und/oder Dispergiermittel |
| 0-2 Gew.-%, | vorzugsweise < 1 % anorganische Salze und im Falle anionischer Reaktivfarbstoffe 0-3 Gew.-% Puffersubstanzen. |

Das neue Verfahren eignet sich insbesondere für die Herstellung salzarmer bzw. salzfreier Präparationen, insbesondere konzentrierter wäßriger Lösungen bzw. Pulver-oder Granulatformierungen von Reaktivfarbstoffen.

Reaktivfarbstoff-Präparationen werden im allgemeinen Puffersubstanzen für den pH-Bereich 4,5-8,5 zugesetzt, beispielsweise Borsäure-, Phosphat- und Hydrogencarbonat-Puffer. Die Lösungen können in üblicher Weise gegebenenfalls nach Zusatz üblicher Einstellmittel zum Trocknen gebracht werden, beispielsweise durch Sprühtrocknung. Man erhält dabei salzarme Pulver- bzw. Granulatformierungen.

Als Einstellmittel kommen übliche Einstellmittel, d. h. feste Verbindungen in Frage, die keine Reaktion mit der Reaktivgruppe eingehen wie z. B. Poly-phosphate, vorzugsweise aber Nichtelektrolyte wie Polyvinylpyrrolidon, Harnstoff, Salze von wasserlöslicher aromatischer Sulfosäure wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxyaddukte, sulfatierte partiell veresterte mehrwertige Alkohole, und vor allem Sulfonate, wie langkettige Alkylsulfonate, beispielsweise Laurylsulfonat, Cetylsulfonat, Stearylsulfonat, Mersolate, Natriumdialkylsulfosuccinate, wie Natriumdioctylsulfosuccinat, wie Tauride, beispielsweise Oleylmethyltaurid (Natriumsalz), Alkylarylsulfonate, wie Alkylbenzolsolfonate mit geradkettiger oder verzweigter Alkylkette mit 7 bis 20 Kohlenstoffatomen und Mono- und Dialkylnaphthalinsulfonate, wie Nonylbenzolsulfonat, Dodecylbenzolsulfonat und Hexadecylbenzolsulfonat, sowie 1-Isopropylnaphthalin-2-sulfonat, Di-iso-propylnaphthalinsulfonat und insbesondere Kondensationsprodukte aus aromatischen Sulfonsäuren und Formaldehyd wie Naphthalinsulfonsäuren, Ditolylethersulfonsäuren oder Terphenylsulfonsäuren mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Die nach dem erfindungsgemäßen Verfahren hergestellten salzarmen festen Präparationen der Azo-Reaktivfarbstoffe (1) haben vorzugsweise folgende Zusammensetzung:
20-90 Gew.-% (bevorzugt 30-80 Gew.-%) Reaktivfarbstoff, bis zu 5 Gew.-%, bevorzugt < 2 Gew.-% anorganisches Salz, bis zu 3 Gew.-% Puffersubstanzen für den pH-Wert 6,5-8,5, weiterhin gegebenenfalls 10-70 % eines konzentrationserhöhenden Zusatzstoffes 0-50 %, der üblichen Einstellmittel.

Besonders geeignete Reaktivfarbstoffe sind solche der Formel

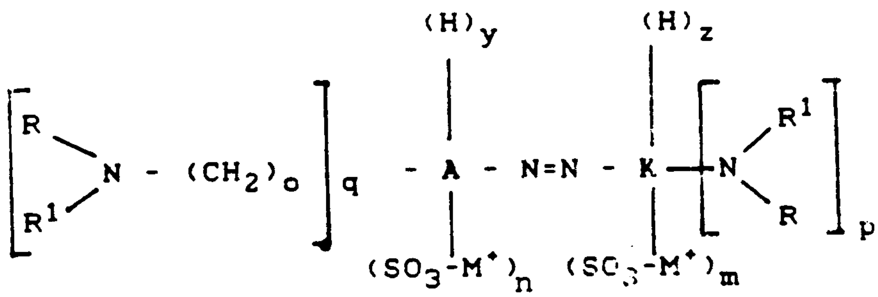

(1)

worin

A = Rest einer Diazokomponente
K = Rest einer Kupplungskomponente
$M^+$ = H, Li, Na, $NH_4$ oder $N(R^2)_4$ wobei
$R^2$ = Alkyl, insbesondere gegebenenfalls durch OH substituiertes $C_1$-$C_4$-Alkyl oder $-(R^3O)-_t$ H mit $R^3$ = $C_2$-$C_3$-Alkyl und t = 2-5
R = Reaktivrest
$R^1$ = Wasserstoff oder Alkyl ($C_1$-$C_4$)
m, n = ganze Zahl von 0-6, wobei n + m = 1-6
o = 1 bis 4
p, q = 0 oder 1, wobei p + q = 1 oder 2
y, z = 0 oder 1, wobei y + z = 1 oder 0

und wobei q + y = 1, sowie p + z = 1

Unter Reaktivresten R werden dabei solche verstanden, die eine oder mehrere reaktive Gruppen oder abspaltbare Substituenten aufweisen, welche unter Färbebedingungen in Gegenwart säurebindender Mittel, mit den Hydroxylgruppen der Cellulose oder den NH-Gruppen von natürlichen oder synthetischen Polyamiden unter Ausbildung kovalenter Bindungen zu reagieren vermögen.

Geeignete Reaktivgruppen, welche mindestens einen abspaltbaren Substituenten an einem heterocyclischen Rest gebunden erhalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z. B. Pyridin-, Pyrimidin-, Pyridazin-, Thiazin-, Oxazin- oder asymmetrischen oder symmetrischen Triazinring, oder an ein derartiges Ringsystem, welches einen oder mehrere ankondensierte Ringe aufweist, wie ein Chinolin-, Phthalazin-, Cinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:
Halogen (Cl, Br oder F), Azido($-N_3$), Rhodanido, Thio, Thiolether, Oxyether.

Bevorzugt sind im Fall der vorliegenden Erfindung Reaktivfarbstoffe mit Reaktivgruppen auf Basis folgender Systeme:
Mono- oder Dihalogen-symmetrische Triazinylreste, Mono-, Di- oder Trihalogenpyrimidinylreste oder halogensubstituierte Chinoxalinylcarbonylreste.

Insbesondere bevorzugt sind folgende Reaktivgruppen der Formel (2), (3) und (4):

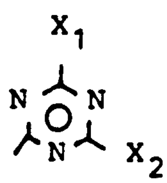
(2)

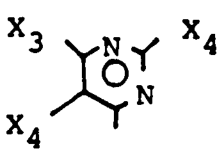
(3)

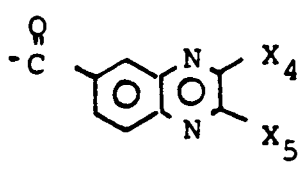
(4)

wobei in den Formeln (2), (3) und (4) gilt:

$X_1$ = F
$X_2$ = Cl, F, $NH_2$, $NHR^2$, $OR^2$, $CH_2R^2$, $SR^2$
$X_3$ = Cl, F, $CH_3$
$X_4$ = Cl, F und

$X_5$ = Cl, F, $CH_3$

und wobei

$R^2$ = Alkyl (insbesondere gegebenenfalls durch OH, $SO_3H$, COOH substituiertes $C_1$-$C_4$-Alkyl, Aryl (insbesondere gegebenenfalls durch $SO_3H$, $C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-Alkoxy substituiertes Benzyl.

Farbstoffe, welche die obengenannten Reaktivgruppensysteme enthalten, sind beispielsweise aus folgenden Publikationen bekannt:

US-PS 3 377 336, US-PS 3 527 760
GB-PS 1 169 254, US-PS 3 669 951
DE-PS 1 644 208, GB-PS 1 188 606
DE-OS 2 817 780, ES-PS 479 771

Unter den nicht heterocyclischen Reaktivresten sind beispielsweise zu erwähnen β-Chlorethylsulfonyl, β-Acetoxyethylsulfonyl, β-Sulfatoethylsulfonyl, β-Thiosulfatoethylsulfonyl, β Sulfatoethylsulfonylmethylamino und Vinylsulfonylmethylamino-Gruppen.

Beispiel 1

1 mol 1 Amino-(4'Aminobenzoyl)-8 hydroxy-3,6-naphthalindisulfonsäure werden in 2.200 ml Wasser mit $LiOH \cdot H_2O$ bei pH = 4.5 mit 1.05 mol 2.4.6 Trifluor-5-Chlorpyrimidin bei 10°C umgesetzt. 1 mol Aminobenzolsulfonsäure-2 werden in 600 ml Wasser mit $LiOH \cdot H_2O$ neutral gelöst. Nach Zugabe von 1.200 ml eines stark sauren gelförmigen Kationenaustauschers auf Basis von vernetztem Polystyrol mit einer Kapazität von 2 mol $SO_3H$-Gruppen pro Liter wird mit 1 mol 30 %iger $NaNO_2$-Lösung bei 5°C diazotiert. Nach beendeter Diazotierung gibt man die Mischung bei 10°C zur Kupplungskomponente, wobei der Kupplungs-pH-Wert durch Zugabe eines Kondensationsproduktes von Triethanolamin mit 3 mol Ethylenoxid bei pH = 6 gehalten wird. Nach erfolgter Kupplung gibt man 700 g ϵ-Caprolactam und 1.000 ml Wasser zu. Nach Abfiltrieren des Austauscherharzes erhält man eine konzentrierte Lösung, die 15 % des Reaktivfarbstoffes mit der Formel (5) bezogen auf freie Säure enthält.

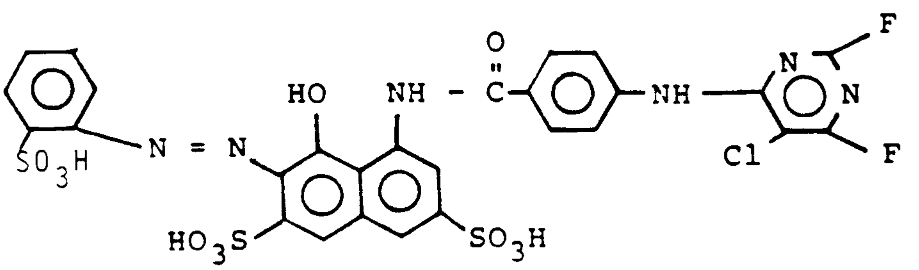

(5)

Arbeitet man nach dem Verfahren der DE-OS 3 228 339.3 (Diazotierung in 2 mol $H_2SO_4$ und Kupplung mit 2 mol $CaCO_3$) erhält man lediglich eine Suspension des Reaktivfarbstoffs (5).

Beispiel 2

1 mol 1-Amino-8-hydroxynaphthalin-3.6-disulfonsäure wird in 1.000 ml Wasser mit $LiOH \cdot H_2O$ gelöst und mit 1.15 mol 2.4-Difluor-5-chlor-6-methylpyrimidin umgesetzt. 1 mol 1-Aminobenzolsulfonsäure-2 werden in 800 ml Wasser mit LiOH neutral gelöst und mit 1.200 ml eines stark sauren gelförmigen Kationenaustauschers auf Basis von vernetztem Polystyrol mit einer Kapazität von 2 mol $SO_3H$-Gruppen pro 1 versetzt. Zu dieser Suspension gibt man bei 5°C 1 mol 30 %ige Natriumnitrit-Lösung.

Nach beendeter Diazotierung wird mit der wie oben angegeben hergestellten Lösung des Kondensationsproduktes von 1-Amino-8-hydroxynaphthalin-3.6-disulfonsäure mit 2.4-Difluor-5-chlor-6-methylpirimidin in Gegenwart von 570 g ϵ-Caprolactam gekuppelt. Der pH-Wert wird dabei mit $LiOH \cdot H_2O$ bei 6 gehalten. Nach Zugabe von 1.000 g Wasser erhält man nach Abfiltrieren des Kationenaustauschers eine konzentrierte Lösung, die 15 % des Reaktivfarbstoffs enthält. Nach Eintragen dieser konzentrierten Reaktivfarbstofflösung in Wasser unter Zusatz der für die Reaktivfärberei üblichen Hilfsmittel erhält man eine Präparation zum Färben oder Bedrucken von natürlichen und regenerierten Cellulosefasern in rotem Ton.

Verwendet man anstelle der oben angegebenen Diazokomponenten und Kupplungskomponenten die der folgenden Tabelle, erhält man ebenfalls stabile, konzentrierte Lösungen.

| Diazokomponente | Kupplungskomponente |
|---|---|
| 1-Amino-4-methylbenzol-2-sulfonsäure | 1-Amino-8-hydroxynaphthalin-3.6-disulfonsäure + 2.4-Difluor-5-chlor-6-methylpyrimidin mit 10 % NN'-Dimethylharnstoff |
| 1-Aminobenzol-2-sulfonsäure | 1-Amino-8-hydroxy-4.6-disulfonsäure + 2.4-Difluor-5-chlor-6-methylpyrimidin |

Beispiel 3

1 mol 4-Aminoazobenzol-4'-sulfonsäure werden in 1.050 ml Wasser mit 1.05 mol $NaNO_2$ bei pH = 8 suspendiert. Diese Suspension gibt man langsam in eine Vorlage, bestehend aus 2.1 l eines Kationenaustauschers, beschrieben in Beispiel 1, 1.050 ml Wasser und 10 g $H_2SO_4$. Nach beendeter Diazotierung wird überschüssiges Nitrit mit Amidosulfonsäure zerstört und die erhaltene Lösung zu einer Lösung aus 1.05 mol Benzoyl-3-amino-8-hydroxy-naphthalin-6-sulfonsäure in 1.400 ml Wasser und ca. 2 mol eines Kondensationsproduktes von Triethanolamin mit 3 mol Ethylenoxid (A) gegeben. Der pH-Wert wird während der Kupplung durch Zugabe von (A) bei 5 gehalten.

Nach beendeter Reaktion wird mit (A) auf pH = 8 gestellt und soviel Wasser zugegeben, daß in der lagerstabilen Lösung 13 % Farbstoff enthalten sind.

Beispiel 4

1 mol Amin der Formel

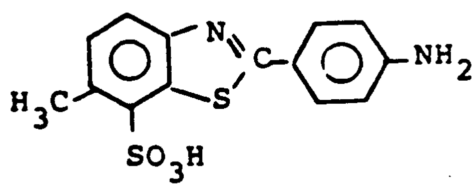

werden in 1500 ml $H_2O$ mit 1 mol eines Kondensationsproduktes aus Triethanolamin mit 3 mol Ethylenoxid (B) gelöst, Nach Zugabe von 1,2 mol eines gelförmigen Kationenaustauschers beschrieben in Beispiel 1 wird mit 1,05 mol $NaNO_2$-Lösung 30 % diazotiert. Die dabei erhaltene Diazolösung gibt man zu einer Vorlage aus 1 mol Barbitursäure, 1 mol B gelöst in 410 mol Wasser, wobei während der Kupplung durch Zugabe von B ein pH-Wert von 7 gehalten wird. Nach Abfiltrieren des Harzes erhält man eine Lösung, die 14 % des Farbstoffs enthält.

**Patentansprüche**

**1.** Verfahren zur Herstellung aromatischer Diazoniumsalze durch Diazotierung von Aminen mittels Salzen

der salpetrigen Säure und Säuren, dadurch gekennzeichnet, daß man als Säuren im Reaktionsmedium unlösliche saure Gruppen aufweisende organische oder anorganische Kationenaustauscher verwendet.

**2.** Verfahren nach Anspruch 1, dadurch gekennzeichnet, daß man in wäßrigem oder wäßrig-organischem Medium arbeitet.

**3.** Verfahren nach wenigstens einem der vorhergehenden Ansprüche, dadurch gekennzeichnet, daß man als Kationenaustauscher einen Kationenaustauscher auf Basis von vernetztem Polystyrol verwendet.

**4.** Verfahren nach wenigstens einem der vorhergehenden Ansprüche, dadurch gekennzeichnet, daß man organische Kationenaustauscher verwendet, die Sulfonsäuregruppen aufweisen.

**5.** Verfahren nach wenigstens einem der vorhergehenden Ansprüche, dadurch gekennzeichnet, daß man mindestens 1 Äquivalent feste Säure pro Mol Salz der salpetrigen Säure verwendet.

**6.** Verfahren nach wenigstens einem der vorhergehenden Ansprüche, dadurch gekennzeichnet, daß man 2 Äquivalente feste Säure pro Mol Salz der salpetrigen Säure verwendet.

**7.** Verfahren zur Herstellung von Azofarbstoffen, durch Umsetzung von Diazoniumsalzen mit Kupplungskomponenten, dadurch gekennzeichnet, daß die Herstellung der Diazoniumsalze gemäß wenigstens einem der vorhergehenden Ansprüche erfolgt.

**8.** Verfahren zur Herstellung von Azofarbstoffen gemäß Anspruch 7 unter Mitverwendung von 0 - 30 Gew.-% organischer Lösungsvermittler und/oder hydrotroper Verbindungen und/oder Dispergiermittel und basischer Lithiumverbindungen, Ammoniumhydroxid, primärer, sekundärer, tertiärer oder quartärer Alkylamine bzw. Alkylammoniumverbindungen als Säurefänger bei der Kupplung.

**9.** Verfahren gemäß Ansprüchen 7 oder 8 zur Herstellung von Azofarbstoffen, die Sulfogruppen und gegebenenfalls Reaktivgruppen enthalten.

## Claims

**1.** Process for preparing aromatic diazonium salts by diazotisation of amines by means of salts of nitrous acid and acids, characterised in that the acids used are organic or inorganic cation exchangers having acid groups which are insoluble in the reaction medium.

**2.** Process according to Claim 1, characterised in that the process is carried out in an aqueous or aqueous organic medium.

**3.** Process according to at least one of the preceding claims, characterised in that the cation exchanger used is a cation exchanger based on crosslinked polystyrene.

**4.** Process according to at least one of the preceding claims, characterised in that the organic cation exchangers used have sulpho groups.

**5.** Process according to at least one of the preceding claims, characterised in that at least 1 equivalent of solid acid is used per mole of salt of nitrous acid.

**6.** Process according to at least one of the preceding claims, characterised in that 2 equivalents of solid acid are used per mole of salt of nitrous acid.

**7.** Process for preparing azo dyestuffs, by reaction of diazonium salts with coupling components, characterised in that the diazonium salts are prepared as per at least one of the preceding claims.

**8.** Process for preparing azo dyestuffs according to Claim 7 using 0-30% by weight of organic solubilisers and/or hydrotropic compounds and/or dispersants and basic lithium compounds, ammonium hydroxide, primary, secondary, tertiary or quaternary alkylamines or alkylammonium compounds as acid acceptors in the coupling.

9. Process according to Claim 7 or 8 for preparing azo dyestuffs which contain sulpho groups and if desired reactive groups.

**Revendications**

1. Procédé de préparation de sels de diazonium aromatiques par diazotation d'amines au moyen de sels de l'acide nitreux et d'acides, caractérisé en ce qu'on utilise comme acides des échangeurs de cations organiques ou inorganiques, insolubles dans le milieu réactionnel et comportant des groupes acides.

2. Procédé selon la revendication 1, caractérisé en ce qu'on travaille en milieu aqueux ou organique-aqueux.

3. Procédé selon l'une au moins des revendications précédentes, caractérisé en ce qu'on utilise comme échangeur de cations un échangevr de cations à base de polystyrène réticulé.

4. Procédé selon l'une au moins des revendications précédentes, caractérisé en ce qu'on utilise des échangeurs de cations organiques qui comportent des groupes acide sulfonique.

5. Procédé selon l'une au moins des revendications précédentes, caractérisé en ce qu'on utilise au moins 1 équivalent d'acide solide par mole de sel de l'acide nitreux.

6. Procédé selon l'une au moins des revendications précédentes, caractérisé en ce qu'on utilise 2 équivalents d'acide solide par mole de sel de l'acide nitreux.

7. Procédé de préparation de colorants azoïques par réaction de sels de diazonium avec des copulants, caractérisé en ce que la préparation des sels de diazonium est réalisée selon au moins l'une des revendications précédentes.

8. Procédé de préparation de colorants azoïques selon la revendication 7 dans lequel on fait intervenir 0-30 % en poids d'agents solubilisants organiques et/ou de composés hydrotropes et/ou d'agents dispersants et des composés basiques du lithium, de l'hydroxyde d'ammonium, des alkylamines primaires, secondaires, tertiaires ou quaternaires ou des composés d'alkylammonium comme agents fixateurs d'acides lors de la copulation.

9. Procédé selon les revendications 7 ou 8 pour la préparation de colorants azoïques qui contiennent des groupes sulfo et éventuellement des groupes réactifs.